# EUROPEAN PATENT APPLICATION

(11) **EP 4 693 539 A1**
(43) Date of publication of application: **11.02.2026**
(21) Application number: 23929950.6
(22) Date of filing: 13.11.2023
(51) Int. Cl.: H01M 10/04

(54) **HOT-PRESS DEVICE**

(30) Priority: 30.03.2023 CN 202320733802 U
(71) Applicant: BYD Company Limited, Shenzhen, Guangdong 518118 (CN)
(72) Inventor: WU, Renwen, Shenzhen, Guangdong 518118 (CN); FU, Jixian, Shenzhen, Guangdong 518118 (CN); SHA, Qihao, Shenzhen, Guangdong 518118 (CN); LI, Xiao, Shenzhen, Guangdong 518118 (CN); ZHANG, Yong, Shenzhen, Guangdong 518118 (CN)
(74) Representative: Mathys & Squire
(86) International application number: PCT/CN2023/131323
(87) International publication number: WO 2024/198381

(57) **Abstract**

This application discloses a hot pressing apparatus. The hot pressing apparatus includes a hot pressing mechanism. The hot pressing mechanism includes: a mounting frame; a pressing plate, where the pressing plate is mounted on the mounting frame and movable in a vertical direction, and is adapted to be pressed against an electrode core; and a hot pressing portion, where the hot pressing portion includes a first hot pressing portion and a second hot pressing portion, and the first hot pressing portion and the second hot pressing portion are disposed at two sides of the pressing plate, respectively, and are used for hot pressing with two ends of the electrode core, respectively. In this way, the pressing plate is pressed against the electrode core, and the first hot pressing portion and the second hot pressing portion are used to perform hot pressing at two ends of the electrode core, respectively, so that the hot pressing mechanism adapts to electrode cores of different thicknesses, a hot pressing effect of the hot pressing mechanism on the electrode core is improved, and hot pressing quality is ensured.

## Description

### CROSS-REFERENCE TO RELATED APPLICATIONS

This application claims priority to Chinese Patent Application No. "202320733802.8", filed by BYD Company Limited on March 30, 2023 and entitled "HOT PRESSING APPARATUS", which is incorporated herein by reference in its entirety.

### TECHNICAL FIELD

This application relates to the technical field of battery production, and in particular, to a hot pressing apparatus.

### BACKGROUND

In the related art, there are thinned areas at two ends of an electrode core of a lithium battery. Existing hot pressing apparatuses usually adapt to the thickness difference between the thinned areas and the middle part of the electrode core by disposing gaskets at two ends, but this may lead to problems of cracking or insufficient compaction at the two ends of the electrode core.

### SUMMARY

This application is intended to solve one of the technical problems in the related art at least to some extent.

Therefore, this application proposes a hot pressing apparatus.

The hot pressing apparatus according to an embodiment of this application includes: a hot pressing mechanism. The hot pressing mechanism includes: a mounting frame, wherein the mounting frame is disposed on a conveying path of an electrode core; a pressing plate, wherein the pressing plate is mounted on the mounting frame and movable in a vertical direction, and is adapted to be pressed against the electrode core; and a hot pressing portion, wherein the hot pressing portion includes a first hot pressing portion and a second hot pressing portion, and the first hot pressing portion and the second hot pressing portion are disposed at two sides of the pressing plate, respectively, and are used for hot pressing with two ends of the electrode core, respectively.

In the hot pressing apparatus according to this embodiment of this application, the hot pressing mechanism is constructed as a segmented structure, the pressing plate is pressed against the electrode core, and the first hot pressing portion and the second hot pressing portion perform hot pressing at two ends of the electrode core, respectively, so that the hot pressing mechanism adapts to electrode cores of different thicknesses, a hot pressing effect of the hot pressing mechanism on the electrode core is improved, and hot pressing quality is ensured.

Additional aspects and advantages of this application are partially set forth in the following description, and partially become apparent from the following description, or may be learned from practice of this application.

### BRIEF DESCRIPTION OF DRAWINGS

FIG. 1 is a front view of a hot pressing apparatus according to an embodiment of this application;
FIG. 2 is a right view of a hot pressing apparatus according to an embodiment of this application; and
FIG. 3 is a top view of a hot pressing apparatus according to an embodiment of this application.

### DESCRIPTION OF EMBODIMENTS

Embodiments of this application are described in detail below, in which examples of the embodiments are illustrated in the drawings. Throughout the drawings, the same or similar reference numerals denote the same or similar elements, or elements having the same or similar functions. The embodiments described below with reference to the drawings are examples and are intended to explain this application, but should not be construed as limiting this application.

In the description of this application, it will be understood that the directional or positional relationships indicated by the terms "center", "longitudinal", "transverse", "length", "width", "upper", "lower", "front", "rear", "left", "right", "vertical", "horizontal", "top", "bottom", "inner", "outer", "circumferential", and the like are based on the directional or positional relationships shown in the drawings, which is only for the purpose of facilitating the description of this application and simplifying the description, and is not intended to indicate or imply that the apparatuses or elements referred to must have specific directions, be constructed and operated in specific directions. Therefore, these terms should not be construed as limiting this application.

In this application, unless otherwise clearly specified and defined, the terms "mount", "interconnect", "connect", "fasten", and the like should be interpreted in their broad senses. For example, the elements may be fixedly connected, detachably connected, or integrally connected; mechanically connected or electrically connected; and directly connected, indirectly connected through an intermediary medium, communicated between interiors of two elements, or interacted between two elements. For those skilled in the art, the specific meanings of the above terms in this application may be interpreted according to the specific condition.

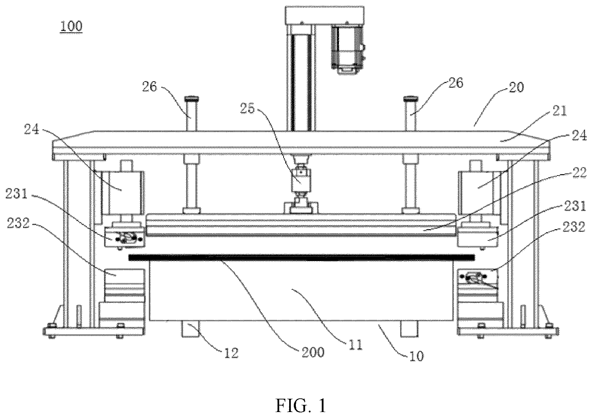

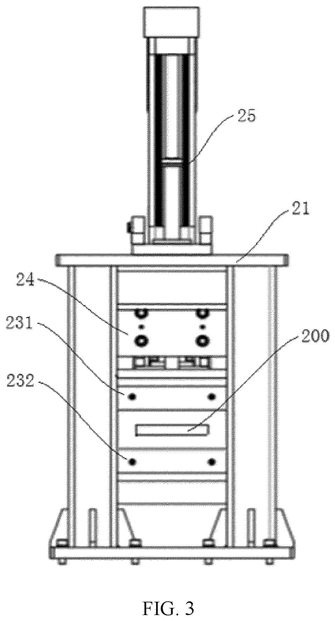

A hot pressing apparatus 100 according to an embodiment of this application is described below with reference to FIG. 1 to FIG. 3.

The hot pressing apparatus 100 according to this embodiment of this application includes a hot pressing mechanism 20.

As shown in FIG. 1, the hot pressing mechanism 20 includes a mounting frame 21, a pressing plate 22 and a hot pressing portion.

The mounting frame 21 is disposed on a conveying path of an electrode core 200. The pressing plate 22 is mounted on the mounting frame 21, and the pressing plate 22 is movable in a vertical direction. The pressing plate 22 is configured to be pressed against the electrode core 200 on the conveying path to fix a position of the electrode core 200. The hot pressing portion is also mounted on the mounting frame 21, and the hot pressing portion is used for hot pressing the electrode core 200.

The pressing plate 22 is disposed corresponding to a middle part of the electrode core 200 and is adapted to be pressed against the electrode core 200 to fix the electrode core 200 on the conveying path. The pressing plate 22 may pressurize only the electrode core 200 to position the electrode core 200. The pressing plate 22 may further heat the electrode core 200 while pressurizing the electrode core to perform hot pressing on a middle area of the electrode core 200.

As shown in FIG. 1, the hot pressing portion includes a first hot pressing portion 233 and a second hot pressing portion 234, the first hot pressing portion 233 and the second hot pressing portion 234 are disposed at two sides of the pressing plate 22, respectively, and the first hot pressing portion 233 and the second hot pressing portion 234 are used for hot pressing two ends of the electrode core 200, respectively.

It is usually necessary to perform hot pressing at two ends of the electrode core 200. Two hot pressing portions (namely, the first hot pressing portion 233 and the second hot pressing portion 234) are disposed on the hot pressing mechanism 20 to perform hot pressing on areas to be hot-pressed located at two ends of the electrode core 200 at the same time.

With reference to FIG. 1, the first hot pressing portion 233 and the second hot pressing portion 234 are disposed at two sides of the pressing plate 22, respectively, which are also at two sides of the conveying path. When a carrying platform 11 and the pressing plate 22 are disposed opposite to each other, the first hot pressing portion 233 and the second hot pressing portion 234 correspond to two ends of the electrode core 200, respectively.

It will be noted that there are thinned areas at two ends of an electrode core (such as an electrode core of a lithium battery). Existing hot pressing apparatuses usually adapt to a thickness difference between the thinned areas and a middle part of the electrode core by disposing gaskets at two ends, but this may lead to problems of cracking or insufficient compaction at two ends of the electrode core.

In this application, the hot pressing mechanism 20 is constructed as a three-segment structure: the pressing plate 22, and the first hot pressing portion 233 and the second hot pressing portion 234 located at two sides of the pressing plate 22. The pressing plate 22 is disposed corresponding to the middle part of the electrode core 200. The first hot pressing portion 233 and the second hot pressing portion 234 are disposed corresponding to two ends of the electrode core 200, respectively, namely, corresponding to the thinned areas of the electrode core 200. In this way, the first hot pressing portion 233 and the second hot pressing portion 234 may be used to perform hot pressing at two ends of the electrode core 200, respectively, to adapt to thicknesses of the thinned areas formed at two ends of the electrode core 200. There is no need to dispose an adjustment structure, such as a gasket, to ensure hot pressing effects at two ends of the electrode core 200.

In the hot pressing apparatus 100 according to this embodiment of this application, the hot pressing mechanism 20 is constructed as a segmented structure, the pressing plate 22 is pressed against the electrode core 200, and the first hot pressing portion 233 and the second hot pressing portion 234 are used to perform hot pressing at two ends of the electrode core 200, respectively, so that the hot pressing mechanism 20 adapts to electrode cores 200 of different thicknesses, a hot pressing effect of the hot pressing mechanism 20 on the electrode core 200 is improved, hot pressing quality is ensured, and the electrode core 200 is prevented from being damaged.

In some embodiments of this application, the hot pressing apparatus 100 further includes a conveying mechanism 10. The conveying mechanism 10 includes a carrying platform 11 and a drive portion. The carrying platform 11 is used for arrangement of the electrode core 200. The drive portion is configured to drive the carrying platform 11 to move, so as to convey the carrying platform 11 and the electrode core 200 to a position at which the carrying platform and the electrode core are suitable for cooperation with the hot pressing mechanism 20.

With reference to FIG. 1, the carrying platform 11 is configured to carry the electrode core 200, and the drive portion may drive the carrying platform 11 to move, so as to adjust a position of the carrying platform 11 in the conveying mechanism 10. When it is necessary to perform hot pressing on the electrode core 200 carried by the carrying platform 11, the drive portion may drive the carrying platform 11 to a position at which the carrying platform may cooperate with the hot pressing mechanism 20. Moreover, after the hot pressing mechanism 20 performs hot pressing on the electrode core 200, the drive portion may drive the carrying platform 11 to move, so as to convey the carrying platform 11 from the hot pressing mechanism 20 to a next workstation. A workstation located downstream of the hot pressing mechanism 20 on the conveying path may be a cooling workstation, a pick-and-place workstation, etc., which is not limited herein.

The electrode core 200 is arranged on an upper surface of the carrying platform 11. When the carrying platform 11 moves to a position corresponding to the hot pressing mechanism 20, the carrying platform 11 and the pressing plate 22 are disposed opposite to each other in a vertical direction, and the pressing plate 22 may move downward (namely, toward a side of the electrode core 200) to apply pressure to the electrode core 200, thereby discharging air inside the electrode core 200 to compact the electrode core 200 while ensuring stability of the electrode core 200.

Meanwhile, with reference to FIG. 1, when the carrying platform 11 and the pressing plate 22 are in corresponding positions, the electrode core 200 arranged on the carrying platform 11 is located at a position corresponding to the hot pressing portion, and the hot pressing portion may generate heat to provide heat energy required by the electrode core 200.

In a hot pressing process, the hot pressing portion may apply a pressing force to the electrode core 200 to achieve a maximum stable thrust (namely, pressure suitable for performing a hot pressing action), thereby performing hot pressing on the electrode core 200.

In this application, the conveying mechanism 10 carries and conveys the electrode core 200 to convey the electrode core 200 to an area corresponding to the hot pressing mechanism 20. The hot pressing mechanism 20 may be used to perform hot pressing on the electrode core 200 without disposing a transporting device separately, and the hot pressing process of the electrode core 200 is performed in an area in which the hot pressing mechanism 20 is disposed on the conveying path, thereby saving a floor space occupied by the hot pressing apparatus 100.

At the same time, the hot pressing process of the electrode core 200 is completed on the carrying platform 11 without transporting the electrode core 200, which saves operating steps required for the electrode core 200 in the hot pressing process, shortens hot pressing time, and improves a hot pressing efficiency of the electrode core 200.

In the hot pressing apparatus 100 according to this embodiment of this application, the conveying mechanism 10 carries and conveys the electrode core 200, and the hot pressing mechanism 20 may be used to perform hot pressing on the electrode core 200 on the carrying platform 11. After the hot pressing is completed, the conveying mechanism 10 may convey the electrode core 200 without disposing a transporting device separately, thereby saving the floor space occupied by the hot pressing apparatus 100 while improving the hot pressing efficiency of the electrode core 200.

In some other embodiments of this application, the hot pressing apparatus 100 further includes a fixing platform (not shown in the figure). A position of the fixing platform is fixed with respect to the mounting frame 21, and the fixing platform is disposed below the pressing plate 22 and is disposed opposite to the pressing plate 22. The fixing platform is used for arrangement of the electrode core 200 to be hot-pressed. The electrode core 200 to be hot-pressed may be transported to the fixing platform by a robot or a transport mechanism.

In some embodiments of this application, the hot pressing portion includes an upper hot pressing plate 231 and a lower hot pressing plate 232. The upper hot pressing plate 231 and the lower hot pressing plate 232 are disposed opposite to each other and spaced apart in a vertical direction, and the upper hot pressing plate 231 and the lower hot pressing plate 232 are capable of performing hot pressing on the electrode core 200 located between the upper hot pressing plate 231 and the lower hot pressing plate 232.

In the hot pressing process of the electrode core 200, the upper hot pressing plate 231 and the lower hot pressing plate 232 are required to transfer heat to the electrode core 200 so that an area to be hot-pressed of the electrode core 200 is fully heated, thereby ensuring a hot pressing effect of the hot pressing portion on the electrode core 200.

In an embodiment of this application, at least one of the upper hot pressing plate 231 and the lower hot pressing plate 232 is movably mounted on the mounting frame 21 in a vertical direction, and one of the upper hot pressing plate 231 and the lower hot pressing plate may be configured to move toward or away from the other thereof.

It may be understood that the upper hot pressing plate 231 and the lower hot pressing plate 232 are disposed opposite to each other in a vertical direction. A relative distance between the upper hot pressing plate 231 and the lower hot pressing plate 232 may be adjusted by driving the upper hot pressing plate 231 or the lower hot pressing plate 232 to move in the vertical direction, so as to adjust the upper hot pressing plate 231 and the lower hot pressing plate 232 to a position suitable for performing hot pressing on the electrode core 200.

With reference to FIG. 1, the upper hot pressing plate 231 is movably mounted on the mounting frame 21 in the vertical direction, and the lower hot pressing plate 232 is fastened on the mounting frame 21. A distance between the upper hot pressing plate 231 and the lower hot pressing plate 232 may be adjusted by driving the upper hot pressing plate 231 to move in the vertical direction. Certainly, the upper hot pressing plate 231 and the lower hot pressing plate 232 may be further constructed to be movably disposed on the mounting frame 21 at the same time. When the hot pressing portion needs to perform hot pressing on the electrode core 200, the upper hot pressing plate 231 may be driven to move downward and the lower hot pressing plate 232 may be driven to move upward, respectively. Namely, the upper hot pressing plate 231 and the lower hot pressing plate 232 may clamp the electrode core 200 in a center-aligned clamping manner (the upper hot pressing plate 231 and the lower hot pressing plate 232 move at the same time and approach each other).

In some embodiments of this application, a hot pressing drive assembly 24 is separately connected to the upper hot pressing plate 231 and the lower hot pressing plate 232, and the hot pressing drive assembly 24 is configured to drive the upper hot pressing plate 231 and the lower hot pressing plate 232 to move toward each other (namely, the foregoing "center-aligned clamping"), so that the upper hot pressing plate 231 and the lower hot pressing plate 232 are used to perform hot pressing on the electrode core 200 located between the upper hot pressing plate and the lower hot pressing plate.

It will be noted that the hot pressing drive assembly 24 may be constructed to be separately connected to the upper hot pressing plate 231 and the lower hot pressing plate 232, and the hot pressing drive assembly 24 drives the upper hot pressing plate 231 or the lower hot pressing plate 232 to move in the vertical direction. Namely, the hot pressing drive assembly 24 includes two drive portions. The two drive portions are connected to the upper hot pressing plate 231 and the lower hot pressing plate 232, respectively, and drive the corresponding hot pressing plates (the upper hot pressing plate 231 or the lower hot pressing plate 232) to move, respectively. Adjustment processes of the upper hot pressing plate 231 and the lower hot pressing plate 232 are independent of each other.

The two drive portions drive the two hot pressing plates (the upper hot pressing plate 231 or the lower hot pressing plate 232) to apply equal forces (pressure) to the electrode core 200 in opposite directions, so that the electrode core 200 is subjected to a uniform force, and the hot pressing effect of the hot pressing apparatus 100 on the electrode core 200 is improved.

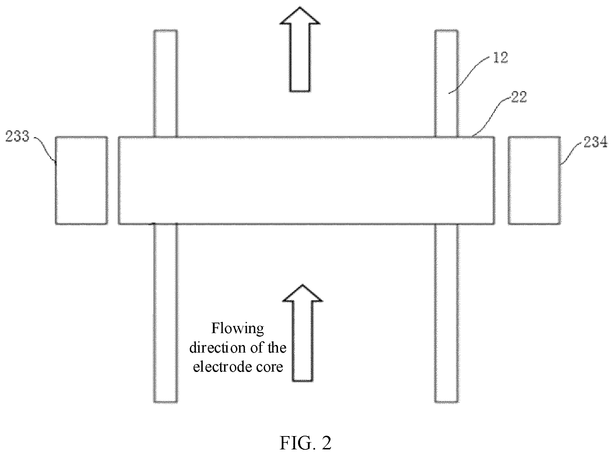

In combination with FIG. 1 and FIG. 2, it will be noted that the hot pressing portion includes a first hot pressing portion 233 and a second hot pressing portion 234. Each of the first hot pressing portion 233 and the second hot pressing portion 234 is constructed as a hot pressing structure including an upper hot pressing plate 231 and a lower hot pressing plate 232. The first hot pressing portion 233 includes a set of an upper hot pressing plate 231 and a lower hot pressing plate 232. The second hot pressing portion 234 further includes a set of an upper hot pressing plate 231 and a lower hot pressing plate 232.

In some embodiments of this application, each of the upper hot pressing plate 231 and the lower hot pressing plate 232 is provided with a component, such as a heating element, an insulation plate and a buffer. Heat generated by the heating element may be transferred to the electrode core 200 to provide heat energy required by the electrode core 200 in the hot pressing process.

In some embodiments of this application, the hot pressing mechanism 20 further includes a hot pressing drive assembly 24. The hot pressing drive assembly 24 is mounted on the mounting frame 21, and at least one of the upper hot pressing plate 231 and the lower hot pressing plate 232 is connected to the hot pressing drive assembly 24. The hot pressing drive assembly 24 is configured to drive the upper hot pressing plate 231 and the lower hot pressing plate 232 to move toward or away from each other.

The hot pressing drive assembly 24 is configured to apply a driving force to the hot pressing portion to control the hot pressing portion to clamp or release the electrode core 200.

The hot pressing drive assembly 24 may be connected to the upper hot pressing plate 231 and the lower hot pressing plate 232 at the same time, and separately drive the upper hot pressing plate 231 and the lower hot pressing plate 232 to move. Certainly, the hot pressing drive assembly 24 may further drive the upper hot pressing plate 231 and the lower hot pressing plate 232 to move at the same time. A drive manner and an arrangement position of the hot pressing drive assembly 24 are not limited herein. It will be understood that the hot pressing drive apparatus is adapted to be arranged at a position to avoid apparatuses or components such as the conveying mechanism 10 and the electrode core 200.

In some embodiments of this application, the hot pressing drive assembly 24 is constructed as one of a cylinder drive mechanism and a motor drive mechanism, so as to improve driving stability and reliability of the hot pressing drive assembly 24.

It may be understood that when the hot pressing drive assembly 24 is constructed as the motor drive mechanism, a thrust applied to the hot pressing plate 22 (the upper hot pressing plate 231 and the lower hot pressing plate 232) by the hot pressing drive assembly may be better controlled, thereby improving reliability and stability of the hot pressing apparatus 100 in the hot pressing process of the electrode core 200.

As shown in FIG. 1, in some embodiments of this application, the hot pressing mechanism 20 further includes a pressing plate drive assembly 25. The pressing plate drive assembly 25 is mounted on the mounting frame 21. The pressing plate drive assembly 25 is connected to the pressing plate 22 and suspends the pressing plate 22 from the mounting frame 21, and the pressing plate drive assembly 25 is configured to drive the pressing plate 22 to move up and down in a vertical direction.

In a process in which the conveying mechanism 10 conveys the electrode core 200, the carrying platform 11 passes through the hot pressing mechanism 20 from a position below the pressing plate 22. The carrying platform 11 is configured to support the electrode core 200. The pressing plate drive assembly 25 drives the pressing plate 22 to move in the vertical direction to adjust pressure applied to the electrode core 200 by the pressing plate 22, thereby ensuring stability of the electrode core 200 and discharging air inside the electrode core 200 to compact the electrode core 200.

As shown in FIG. 1, in some embodiments of this application, the hot pressing mechanism 20 further includes a guide assembly 26. The guide assembly 26 is mounted on the mounting frame 21, and the guide assembly 26 is connected to the pressing plate 22. The guide assembly 26 is configured to position the pressing plate 22 to keep a pressing surface of the pressing plate 22 horizontally disposed.

It will be understood that a function of the pressing plate 22 is to be pressed against the electrode core 200 to fasten the electrode core 200 on the carrying platform 11. Moreover, the pressure applied to the electrode core 200 by the pressing plate 22 discharges air inside the electrode core 200 and compacts the electrode core 200, thereby improving the hot pressing effect of the electrode core 200.

A function of the carrying platform 11 is to carry the electrode core 200. When an upper surface of the carrying platform 11 (namely, a surface carrying the electrode core 200) is kept horizontally disposed, the carrying platform 11 has good stability when carrying the electrode core 200. In this way, the pressing surface of the pressing plate 22 (namely, a surface where the pressing plate 22 is pressed against the electrode core 200) is arranged to be horizontally disposed, so as to be clamped and fixed by the pressing plate 22 and the carrying platform 11.

With reference to FIG. 1, in one embodiment of this application, the guide assembly 26 is constructed as a bearing assembly. The bearing assembly includes a bearing and a connecting shaft. The bearing is fastened on the mounting frame 21. One end of the connecting shaft is connected to the pressing plate 22 and passes through the bearing. The connecting shaft may move in a vertical direction with the pressing plate 22. The bearing may improve stability of movement of the connecting shaft.

There are two groups of bearing assemblies. The two groups of bearing assemblies are disposed at two sides of the pressing plate drive assembly 25, respectively, to improve a guiding and positioning effect of the guide assembly 26 on the pressing plate 22 and improve stability of a process in which the pressing plate 22 moves up and down.

In some embodiments of this application, the carrying platform 11 is provided with a clamping mechanism (not shown in the figure). The clamping mechanism is configured to clamp the electrode core 200 and fasten the electrode core 200 to the carrying platform 11, thereby ensuring a conveying effect of the carrying platform 11 on the electrode core 200.

It will be understood that the carrying platform 11 is configured to carry the electrode core 200, and the drive portion applies a driving force to convey the electrode core 200. The clamping mechanism according to this application may clamp and fasten the electrode core 200 in a conveying process to prevent the electrode core 200 from falling off the carrying platform 11 and ensure conveying reliability of the electrode core 200. When the carrying platform 11 is disposed corresponding to the pressing plate 22, the clamping mechanism may release a clamping state of the electrode core 200 and avoid a mechanism such as the pressing plate 22 and the hot pressing portion, so that the hot pressing mechanism 20 performs hot pressing on the electrode core 200.

The clamping mechanism may be constructed as a structure such as a claw, namely, any mechanical structure with a clamping and fastening function, which is not limited herein.

As shown in FIG. 1 and FIG. 2, in some embodiments of this application, the conveying mechanism 10 further includes a guide rail 12. The guide rail 12 is connected to the carrying platform 11, and the drive portion is configured to drive the carrying platform 11 to move in an extension direction of the guide rail 12.

The guide rail 12 plays a guiding role in a conveying direction of the carrying platform 11, and the carrying platform 11 may convey the electrode core 200 in an extension direction of the guide rail 12 under an action of the drive portion. It will be noted that the extension direction of the guide rail 12 is not limited to a straight line, but may also be a curve, a broken line, etc., to meet requirement of conveying the electrode core 200 to different workstations in a production process.

The drive portion may be configured as an apparatus having an output driving force, such as a drive motor.

A process in which the hot pressing mechanism 20 according to this embodiment of this application performs hot pressing on the electrode core 200 is described with reference to FIG. 1 to FIG. 3:
The conveying mechanism 10 conveys the electrode core 200 to a position corresponding to the hot pressing mechanism 20. In this case, the carrying platform 11 and the electrode core 200 arranged on the carrying platform 11 are disposed opposite to the pressing plate 22.

The hot pressing drive assembly 24 drives the upper hot pressing plate 231 to move downward to a pre-pressing position. At this position, the upper hot pressing plate 231 and the lower hot pressing plate 232 have a preliminary pressing force on the electrode core 200 to ensure that the electrode core 200 does not deviate.

The clamping mechanism releases a clamping action on the electrode core 200.

The pressing plate drive assembly 25 drives the pressing plate 22 to gradually move downward and press the electrode core 200 to achieve a maximum pressing force.

The hot pressing drive assembly 24 drives the upper hot pressing plate 231 to move downward to achieve a maximum stable thrust.

When hot pressing time of the electrode core 200 by the hot pressing mechanism 20 reaches preset time, the pressing plate drive assembly 25 drives the pressing plate 22 to move upward to reset, and the clamping mechanism clamps the electrode core 200 again. The hot pressing drive assembly 24 drives the upper hot pressing plate 231 to reset. The conveying mechanism 10 conveys the electrode core 200 which has been hot-pressed.

In this way, hot pressing is performed on the electrode core 200.

The hot pressing apparatus 100 according to this application may perform hot pressing on the electrode core at a position at which the hot pressing mechanism 20 is disposed on the conveying path of the electrode core 200, and after the hot pressing is completed, the conveying mechanism 10 may convey the electrode core 200 to a next workstation without disposing a transporting device, thereby saving transporting costs while shortening hot pressing time of the electrode core 200.

In the description of this specification, the reference terms such as "one embodiment", "some embodiments", "an example", "a specific example", or "some examples" and the like mean that the specific features, structures, materials, or characteristics described in conjunction with the embodiment or example are included in at least one embodiment or example of this application. In this specification, the illustrative expressions of the above terms do not necessarily refer to the same embodiment or example. Furthermore, the specific features, structures, materials, or characteristics described may be combined in a suitable manner in any one or more embodiments or examples. In addition, without contradiction to each other, those skilled in the art may combine and integrate different embodiments or examples described in this specification, as well as the features of different embodiments or examples.

Although embodiments of this application have been shown and described above, it will be understood that the above embodiments are examples and should not be construed as limiting this application. Those skilled in the art may make changes, modifications, substitutions, and variations to the above embodiments within the scope of this application.

## Claims

1. A hot pressing apparatus, comprising:
a hot pressing mechanism (20), wherein the hot pressing mechanism (20) comprises:
a mounting frame (21);
a pressing plate (22), wherein the pressing plate (22) is mounted on the mounting frame (21) and movable in a vertical direction, and is adapted to be pressed against an electrode core (200); and
a hot pressing portion, wherein the hot pressing portion comprises a first hot pressing portion (233) and a second hot pressing portion (234), and the first hot pressing portion (233) and the second hot pressing portion (234) are disposed at two sides of the pressing plate (22), respectively, and are used for hot pressing two ends of the electrode core (200), respectively.

2. The hot pressing apparatus according to claim 1, wherein the hot pressing portion comprises an upper hot pressing plate (231) and a lower hot pressing plate (232), the upper hot pressing plate (231) and the lower hot pressing plate (232) are disposed opposite to each other and spaced apart, and the upper hot pressing plate (231) and the lower hot pressing plate (232) are capable of performing hot pressing on the electrode core (200) located between the upper hot pressing plate (231) and the lower hot pressing plate (232).

3. The hot pressing apparatus according to claim 2, wherein at least one of the upper hot pressing plate (231) and the lower hot pressing plate (232) is movably mounted on the mounting frame (21) in a vertical direction, and is configured to move toward or away from the other of the upper hot pressing plate (231) and the lower hot pressing plate (232).

4. The hot pressing apparatus according to claim 3, wherein the hot pressing mechanism (20) further comprises a hot pressing drive assembly (24), the hot pressing drive assembly (24) is mounted on the mounting frame (21), and at least one of the upper hot pressing plate (231) and the lower hot pressing plate (232) is connected to the hot pressing drive assembly (24).

5. The hot pressing apparatus according to claim 4, wherein the hot pressing drive assembly (24) is separately connected to the upper hot pressing plate (231) and the lower hot pressing plate (232), and is adapted to drive the upper hot pressing plate (231) and the lower hot pressing plate (232) to move toward each other.

6. The hot pressing apparatus according to claim 4 or 5, wherein the hot pressing drive assembly (24) is constructed as one of a cylinder drive mechanism and a motor drive mechanism.

7. The hot pressing apparatus according to any one of claims 1 to 6, wherein the hot pressing mechanism (20) further comprises a pressing plate drive assembly (25), the pressing plate drive assembly (25) is mounted on the mounting frame (21), the pressing plate drive assembly (25) is connected to the pressing plate (22) and suspends the pressing plate (22) from the mounting frame (21), and the pressing plate drive assembly (25) is configured to drive the pressing plate (22) to move up and down in a vertical direction.

8. The hot pressing apparatus according to claim 7, wherein the hot pressing mechanism (20) further comprises a guide assembly (26), the guide assembly (26) is mounted on the mounting frame (21) and is connected to the pressing plate (22), and the guide assembly (26) is configured to guide and position the pressing plate (22) and keep a pressing surface of the pressing plate (22) horizontally disposed.

9. The hot pressing apparatus according to any one of claims 1 to 8, further comprising a conveying mechanism (10), wherein the conveying mechanism (10) comprises:
a carrying platform (11), wherein the carrying platform (11) is used for arrangement of the electrode core (200); and
a drive portion, wherein the drive portion is configured to drive the carrying platform (11) to move.

10. The hot pressing apparatus according to claim 9, wherein the carrying platform (11) is provided with a clamping mechanism, and the clamping mechanism is configured to clamp the electrode core (200) and fasten the electrode core (200) to the carrying platform (11).

11. The hot pressing apparatus according to claim 9 or 10, wherein the conveying mechanism (10) further comprises a guide rail (12), the guide rail (12) is connected to the carrying platform (11), and the drive portion is configured to drive the carrying platform (11) to move in an extension direction of the guide rail (12).
